# EUROPÄISCHE PATENTSCHRIFT

(11) **EP 3 458 267 B1**
(45) Veröffentlichungstag und Bekanntmachung des Hinweises auf die Patenterteilung: **11.03.2020**
(21) Anmeldenummer: 17725918.1
(22) Anmeldetag: 16.05.2017
(51) Int. Cl.: B41F 33/00

(54) **LEITSTAND EINER DRUCKMASCHINE**
CONTROL PANEL OF A PRINTING PRESS
TABLEAU DE COMMANDE D'UNE IMPRIMANTE

(30) Priorität: 18.05.2016 DE 102016208521
(43) Veröffentlichungstag der Anmeldung: 27.03.2019
(73) Patentinhaber: Koenig & Bauer AG, 97080 Würzburg (DE)
(72) Erfinder: FLEMMING, Steven, 10318 Berlin (DE); LOCHMÜLLER, Jens, 33729 Bielefeld (DE); KOSEL, Gero, 33154 Salzkotten (DE); BUDACH, Stefan, 01445 Radebeul (DE); NOACK, Martina, 01099 Dresden (DE)
(74) Vertreter: Koenig & Bauer AG
(86) Internationale Anmeldenummer: PCT/EP2017/061695
(87) Internationale Veröffentlichungsnummer: WO 2017/198649

(56) Entgegenhaltungen:
- WO-A1-2014/122280
- DE-A1-102006 048 539
- DE-A1-102007 020 511
- DE-A1-102012 022 882

## Beschreibung

Die Erfindung betrifft einen Leitstand einer Druckmaschine gemäß Anspruch 1.

Durch die DE 10 2012 022 882 A1 ist eine Vorrichtung zum Steuern einer Maschine in der grafischen Industrie mit einem Steuerstand bekannt, welcher Steuerstand wenigstens einen Bildschirm zur Darstellung von Maschineninformationen aufweist, wobei der Steuerstand mehrere Sensoren zur Erfassung von Gesten einer Bedienperson aufweist, welche die Maschine über den Steuerstand bedient, wobei der Steuerstand unterhalb wenigstens eines Bildschirms eine Auflage zur Aufnahme eines bogenförmigen Bedruckstoffs aufweist, wobei wenigstens ein Sensor so angeordnet ist, dass er Gesten der Bedienperson erkennen kann, welche diese Bedienperson mit ihren Fingern an der Oberfläche eines auf der Auflage liegenden Bedruckstoffs zeigt, wobei die Sensoren vorzugsweise Kameras sind und wobei der Steuerstand vorzugsweise ein Farbmessgerät zur Erfassung eines auf der Auflage liegenden bogenförmigen Bedruckstoffs aufweist und das Farbmessgerät mittels der Sensoren zur Erfassung von Gesten steuerbar ist.

Durch die DE 10 2006 048 539 A1 ist eine Vorrichtung zur Positionierung eines Messkopfes über einem Bedruckstoff mit einer Anzeigevorrichtung und einer motorisch angetriebenen Positionierungsvorrichtung für den Messkopf bekannt, wobei die Positionierungsvorrichtung für den Messkopf von einem Rechner ansteuerbar ist, welcher mit der Anzeigevorrichtung verbunden ist.

Durch das Dokument JOSHI, Tejashri J.; KUMAR, Shiva; TARAPORE, N. Z.; MOHILE, Vivek: Static Hand Gesture Recognition using an Android Device, in: International Journal of Computer Applications (0975 - 8887), Volume 120, June 2015, S. 48-53, online unter http://research.ijcaonline.org/volume120/number21/pxc3904348.pdf, abgerufen am 04.01.2017, ist eine Kamera zur Erfassung von mindestens einer von einer Person ausgeübten Geste bekannt.

Durch die DE 101 20 487 A1 ist ein Leitstand einer Druckmaschine bekannt, aufweisend zumindest eine Auflage zur Aufnahme eines bogenförmigen Bedruckstoffes, eine Messeinrichtung zum Messen einer Messgröße des auf der Auflage aufgelegten bogenförmigen Bedruckstoffes, wobei die Messeinrichtung einen sich oberhalb des bogenförmigen Bedruckstoffes erstreckenden Messbalken aufweist, wobei der Messbalken der Messeinrichtung über dem auf der Auflage aufgelegten bogenförmigen Bedruckstoff verfahrbar ist.

Der Erfindung liegt die Aufgabe zugrunde, einen Leitstand einer Druckmaschine zu schaffen, wobei der Leitstand insbesondere für eine an einem verfahrbaren Messbalken angeordnete Messeinrichtung einen hohen Bedienungskomfort aufweist.

Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass am Leitstand von einer Person, insbesondere von einem Bediener der Druckmaschine mindestens eine Steuerfunktion berührungslos ausgelöst werden kann. Die auslösbaren Steuerfunktionen betreffen hier vorrangig ein Ingangsetzen oder Stoppen einer motorisch bewegten Messeinrichtung und/oder ein Fixieren des Bedruckstoffes relativ zur Messeinrichtung und/oder ein Auslösen eines Messvorgangs mit dieser Messeinrichtung, wobei diese Messeinrichtung jeweils eine zum Leitstand gehörende Baugruppe darstellt. Sicherheitskritische Steuerfunktionen zur Bedienung der Druckmaschine, insbesondere ihrer Antriebe, stehen hier nicht im Fokus der Betrachtung. Da das Auslösen der Steuerfunktionen, insbesondere die Betätigung der Messeinrichtung berührungslos erfolgt, besteht während des Ausführens von Arbeiten am Leitstand nicht oder zumindest in deutlich geringerem Maße die Gefahr, z. B. Bedienelemente und/oder einen Bildschirm der Messeinrichtung und/oder des Leitstandes z. B. durch vom noch farbfeuchten Bedruckstoff an die Hand der Person übertragene Druckfarbe o. ä. zu beschmutzen. Zudem lässt sich das vorgeschlagene Bedienkonzept kostengünstig realisieren. Es ist vom Bediener der Druckmaschine intuitiv auf einfache Weise schnell zu erlernen. Weitere Vorteile sind in Verbindung mit der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Darstellung eines Leitstandes;
- Fig. 2: der Leitstand der Fig. 1 in einer Seitenansicht;
- Fig. 3: der Leitstand der Fig. 1 in einer Frontansicht.

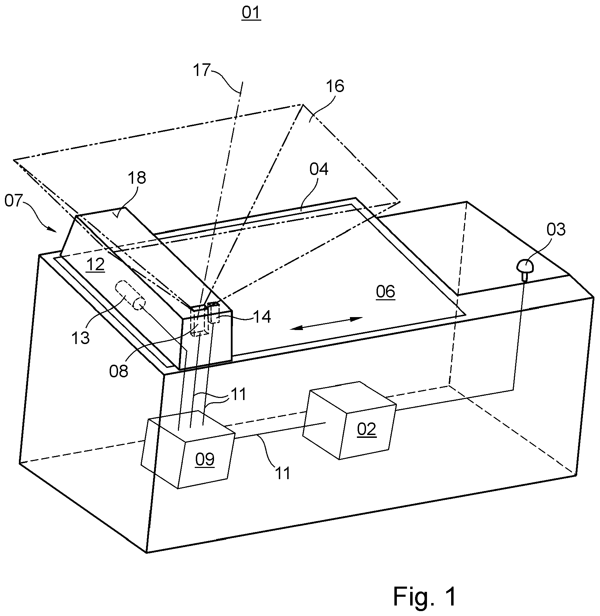

Fig. 1 zeigt in einer perspektivischen Darstellung beispielhaft und vereinfacht einen Leitstand 01 einer z. B. als eine Bogendruckmaschine ausgebildeten Druckmaschine (nicht dargestellt), wobei dieser Leitstand 01 und die Druckmaschine zumindest datentechnisch miteinander verbunden und i. d. R. in räumlicher Nähe zueinander angeordnet sind. Bei der Druckmaschine handelt es sich z. B. um eine in einem Offsetdruckverfahren druckende Rotationsdruckmaschine oder um eine in einem Non-Impact-Druckverfahren, also druckformlos druckende Druckmaschine, d. h. eine sogenannte Digitaldruckmaschine.

Der Leitstand 01 weist außer einer vorzugsweise elektronischen Steuereinheit 02 zur maschinentechnischen, z. B. antriebsmäßigen Steuerung der Druckmaschine und einer mit der Steuereinheit 02 verbundenen mindestens ein Bedienelement 03, z. B. einen Not-Aus-Schalter aufweisenden Mensch-Maschine-Schnittstelle zumindest noch folgende Baugruppen bzw. Elemente auf:
a) eine z. B. tischförmige, insbesondere plan ausgebildete Auflage 04 mit einer z. B. in Schwarz ausgebildeten Oberfläche zur i. d. R. vollflächigen Aufnahme eines bogenförmigen Bedruckstoffes 06, z. B. eines Druckbogens aus Papier, Pappe oder Karton, wobei der insbesondere rechteckige Druckbogen Kantenlängen z. B. im Bereich von 110 mm x 900 mm oder größer aufweist und zur Prüfung eines mit der Druckmaschine auf ihn aufgebrachten Druckbildes aufgrund seiner Größe von einer am Leitstand 01 tätigen Person vorzugsweise beidhändig auf die Auflage 04 gelegt wird, wobei der auf der Auflage 04 aufgelegte bogenförmige Bedruckstoff 06 dort zu seiner Fixierung z. B. mittels schaltbarer Saugluft in seiner jeweiligen Lage gehalten oder zumindest haltbar ist,
b) eine z. B. optoelektronische Messeinrichtung 07 zum Messen einer Messgröße des auf der Auflage 04 aufgelegten bogenförmigen Bedruckstoffes 06, z. B. zum Messen einer Farbdichte und/oder eines Farbwertes und/oder eines Registers und/oder eines Passers in dem betreffenden mit der Druckmaschine auf den Bedruckstoff 06 aufgebrachten Druckbild,
c) mindestens eine vorzugsweise digitale Kamera 08 zur Erfassung von mindestens einer von einer Person mit mindestens einer seiner Hände am Leitstand 01 ausgeübten Geste, wobei die betreffende Kamera 08 z. B. als eine Halbleiterkamera mit mindestens einem Bildsensor, insbesondere mit einem CMOS-Bildsensor ausgebildet ist,
d) und eine insbesondere elektronische, vorzugsweise mindestens eine Recheneinheit aufweisende Bildverarbeitungseinrichtung 09 zur Verarbeitung und Auswertung von der betreffenden Kamera 08 erfasster Bilder, wobei von der betreffenden Kamera 08 erfasste Bilder insbesondere in Form digitaler Bilddaten von der betreffenden Kamera 08 z. B. über eine Datenleitung 11 oder drahtlos an die Bildverarbeitungseinrichtung 09 geleitet werden. Die Bildverarbeitungseinrichtung 09 ist ihrerseits z. B. über eine weitere Datenleitung 11 oder drahtlos datentechnisch z. B. mit der Steuereinheit 02 zur Steuerung der Druckmaschine verbunden. Die jeweilige diverse Einrichtungen und/oder Einheiten miteinander verbindende Datenleitung 11 ist z. B. als ein Datenbussystem ausgebildet.

Die Messeinrichtung 07 weist einen sich oberhalb des bogenförmigen Bedruckstoffes 06 vorzugsweise linear erstreckenden Messbalken 12 auf, wobei der Messbalken 12 der Messeinrichtung 07 über dem Bedruckstoff 06, d. h. oberhalb des auf der Auflage 04 aufgelegten und dort vorzugsweise fixierten bogenförmigen Bedruckstoffes 06 insbesondere linear vorzugsweise in den in der Fig. 1 durch einen Doppelpfeil angedeuteten Richtungen, d. h. längs zu einer der Person zugewandten Frontseite des Leitstandes 01 bidirektional verfahrbar ist. Vorteilhafterweise ist die betreffende mindestens eine Geste erfassende Kamera 08 in oder an dem verfahrbaren Messbalken 12 angeordnet. Diese Anordnung ist insbesondere deshalb sehr vorteilhaft, weil die betreffende derart angeordnete Kamera 08 weder durch den Bedruckstoff 06 noch durch den Messbalken 12 der Messeinrichtung 07 verdeckt werden kann. Daher ist die betreffende Kamera 08 für die am Leitstand 01 tätige Person jederzeit ungehindert zugänglich. Dabei ist der Messbalken 12 zur Ausführung einer Bewegung von einem z. B. von der Steuereinheit 02 gesteuerten oder zumindest steuerbaren Motor 13 angetrieben, wobei zumindest die Steuerung des Motors 13 des Messbalkens 12 berührungslos, insbesondere durch mindestens eine von der Person in einem Erfassungsbereich 16 der betreffenden Kamera 08 ausgeübte und von der betreffenden Kamera 08 erfasste Geste betätigt oder zumindest betätigbar ist. Alternativ oder zusätzlich zur Steuerung des Motors 13 des Messbalkens 12 ist ein mit dem Messbalken 12 der Messeinrichtung 07 auszuführender Messvorgang durch mindestens eine von der Person im Erfassungsbereich 16 der betreffenden Kamera 08 ausgeübte und von der betreffenden Kamera 08 erfasste Geste gesteuert oder zumindest steuerbar. Auch ist ein Anschalten und/oder Abschalten der zum Fixieren eines auf der Auflage 04 aufgelegten bogenförmigen Bedruckstoffes 06 erforderlichen Saugluft z. B. durch mindestens eine Geste betätigt oder zumindest betätigbar, wobei durch die von der betreffenden Kamera 08 erfasste Geste z. B. mindestens ein Pneumatikventil gesteuert oder zumindest steuerbar ist. Die zur Betätigung des Motors 13 des Messbalkens 12 und/oder zur Auslösung des Messvorgangs und/oder zum Schalten der Saugluft jeweils erforderliche Geste von mindestens einer Hand der am Leitstand 01 tätigen Person wurde in der bildauswertenden Bildverarbeitungseinrichtung 09 jeweils z. B. programmtechnisch entweder zuvor festgelegt oder dort eingelernt, d. h. es wurden bestimmte Bilddaten definiert, die zur Auslösung einer bestimmten Steuerfunktion führen.

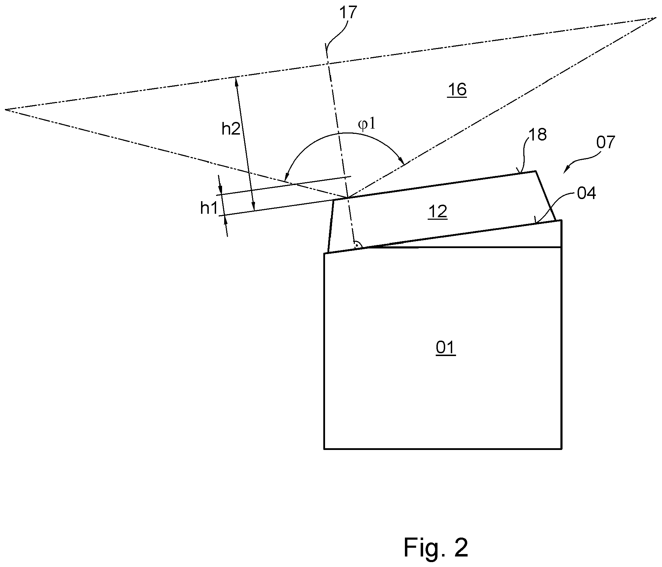

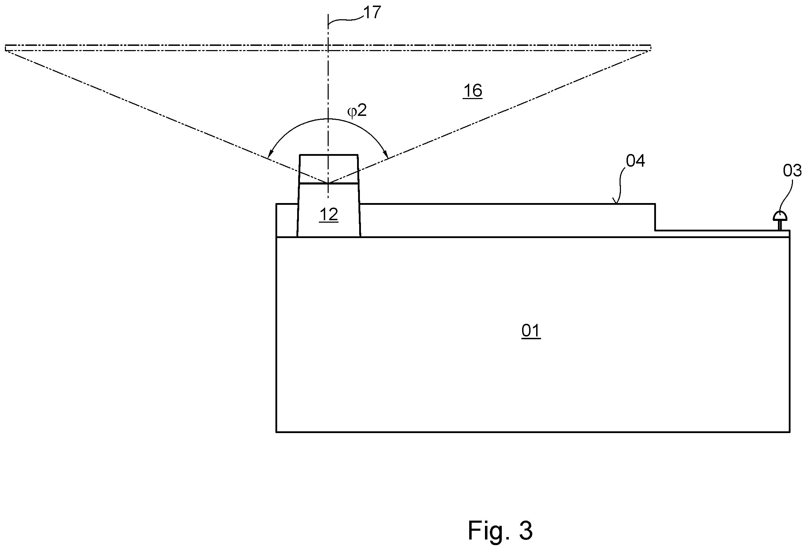

In der bevorzugten Ausgestaltung ist der Erfassungsbereich 16 der betreffenden Kamera 08 von der Auflage 04 abgewandt insbesondere vertikal nach oben gerichtet, wobei die betreffende Kamera 08 die mindestens eine in ihrem Erfassungsbereich 16 von der Person ausgeübte Geste erfasst oder wobei mit der betreffenden Kamera 08 die mindestens eine in ihrem Erfassungsbereich 16 von der Person ausgeübte Geste zumindest erfassbar ist. Die betreffende Kamera 08 ist vorzugsweise in oder an dem Messbalken 12 an seinem der die mindestens eine Geste ausübenden Person zugewandten Ende angeordnet, z. B. in einem Bereich von bis zu 200 mm ausgehend von der der Person zugewandten Frontseite des Leitstandes 01. Wie es insbesondere aus den Fig. 2 und 3 ersichtlich ist, ist der Erfassungsbereich 16 der betreffenden Kamera 08 vorzugsweise längs zur Frontseite des Leitstandes 01 und/oder auch orthogonal dazu jeweils in einem stumpfen Öffnungswinkel ϕ1; ϕ2 geöffnet, vorzugsweise jeweils in einem Öffnungswinkel ϕ1; ϕ2 im Bereich um 135°, jeweils vorzugsweise symmetrisch zu einer zentralen Achse 17 des Erfassungsbereiches 16 der betreffenden Kamera 08. Falls die Auflage 04 z. B. rampenförmig zur Frontseite des Leitstandes 01 fallend geneigt ausgebildet ist, wobei diese Neigung gegenüber einer Horizontalen z. B. weniger als 30°, insbesondere weniger als 15° beträgt, ist der die von der Person ausgeübte Geste erfassende Erfassungsbereich 16 der betreffenden Kamera 08 z. B. um denselben Neigungswinkel wie derjenige der Auflage 04 in Richtung zur Frontseite des Leitstandes 01 geneigt (Fig. 2), so dass die zentrale Achse 17 des Erfassungsbereiches 16 der betreffenden Kamera 08 stets lotrecht zur Auflage 04 angeordnet ist.

In einer vorteilhaften Weiterbildung der gefundenen Lösung ist in Verbindung mit der betreffenden Kamera 08, also insbesondere auch im oder am Messbalken 12 z. B. neben dem Bildsensor der Kamera 08 ein Abstandssensor 14 vorgesehen, wobei der Abstandssensor 14 einen Abstand zwischen der betreffenden Kamera 08 und der von der Person insbesondere im Erfassungsbereich 16 ausgeübten Geste misst oder wobei mit dem Abstandssensor 14 ein Abstand zwischen der betreffenden Kamera 08 und der von der Person insbesondere im Erfassungsbereich 16 ausgeübten Geste zumindest messbar ist. Der Abstandssensor 14 ist vorzugsweise ebenso wie die betreffende Kamera 08 in oder an dem Messbalken 12 an seinem der die mindestens eine Geste ausübenden Person zugewandten Ende angeordnet. Beispielsweise bedingt durch ein von der betreffenden Kamera 08 verwendetes Objektiv beginnt ihr Erfassungsbereich 16 in einer ersten Höhe h1 von z. B. 100 mm z. B. über einer oberen Begrenzungsfläche 18 des Messbalkens 12 und reicht bis in eine zweite Höhe h2 von z. B. 650 mm z. B. über der oberen Begrenzungsfläche 18 des Messbalkens 12 (Fig. 2). Mittels des Abstandssensors 14 ist somit prüfbar, ob eine von der Person ausgeübte Geste in dem durch die Höhen h1; h2 definierten Erfassungsbereich 16 ausgeführt worden ist. Die Höhen h1; h2 definieren in Verbindung mit den Öffnungswinkel ϕ1; ϕ2 des Erfassungsbereiches 16 der betreffenden Kamera 08 einen Messraum. In der bevorzugten Ausführung der gefundenen Lösung ist nur eine in dem derart definierten Messraum von der Person ausgeübte Geste für die Auslösung einer Steuerfunktion zulässig und/oder nur eine solche Geste wird von der Bildverarbeitungseinrichtung 09 zur Steuerung des Motors 13 des Messbalkens 12 und/oder zum Schalten der den Bedruckstoff 06 auf der Auflage 04 fixierenden Saugluft und/oder zur Steuerung eines mit dem Messbalken 12 der Messeinrichtung 07 auszuführenden Messvorgangs ausgewertet. Somit ist eine Steuerfunktion mittels der von der Kamera 08 erfassten Geste ausgelöst oder zumindest auslösbar, jedoch ist diese Steuerfunktion jeweils in Abhängigkeit vom gemessenen Abstand des Abstandssensors 14 ausgelöst oder zumindest auslösbar. Durch die abstandsabhängige Auslösung einer Steuerfunktion wird die Betriebssicherheit z. B. der Messeinrichtung 07 erhöht. Eine am Leitstand 01 tätige Person gewinnt auch an Sicherheit, in welchem begrenzten Messraum ausgeübte Gesten zum Auslösen einer Steuerfunktion geeignet sind. Andernorts, d. h. außerhalb des definierten Messraumes sind Gesten hinsichtlich einer Steuerfunktion wirkungslos.

Der Abstandssensor 14 weist z. B. mindestens einen Laser, vorzugsweise zwei an voneinander beabstandeten Positionen angeordnete Laser auf, mit welchem bzw. mit welchen der Abstand zwischen der Kamera 08 und der von der Person ausgeübten Geste z. B. durch Verwendung eines Triangulationsverfahrens ermittelt wird. Triangulation ist eine geometrische Methode der optischen Abstandsmessung durch Messung zweier Winkel innerhalb von Dreiecken. Die Berechnung des Abstandes eines Messobjektes, z. B. der eine Geste ausführenden Hand einer Person zu einer die Positionen der Laser verbindenden geraden Basislinie erfolgt mittels trigonometrischer Funktionen, wobei sich die beiden Winkel von dieser Basislinie ausgehend jeweils zum Messobjekt hin öffnen, wobei ein zwischen den jeweiligen Ursprüngen dieser Winkel durch die Positionen der Laser gegebener Abstand bekannt ist. Alternativ kann der Abstandssensor 14 z. B. als ein Ultraschallsensor ausgebildet sein und den Abstand zu einer eine Geste ausführenden Hand einer Person z. B. durch eine Laufzeitmessung zwischen einem Aussenden mindestens eines Ultraschallimpulses und Empfangen seines Echos ermitteln. Der Abstandssensor 14 stellt seine Messwerte z. B. der Bildverarbeitungseinrichtung 09 zur Verfügung. Die im Triangulationsverfahren auszuführenden Berechnungen werden z. B. in der Bildverarbeitungseinrichtung 09 durch deren Recheneinheit durchgeführt. Alternativ ist der Abstand zwischen der betreffenden Kamera 08 und der von der Person ausgeübten Geste auch z. B. mittels zweier beabstandet angeordneter Kameras 08 oder mittels einer Kamera 08 mit zwei voneinander beabstandet angeordneten Bildsensoren messbar. Die Kamera(s) 08 und/oder der Abstandssensor 14 sind vorzugsweise dauerhaft aktiv, so dass am Leitstand 01 jederzeit ein Steuerbefehl mittels einer Geste erteilt werden kann.

Der Leitstand 01 weist vorzugsweise weitere in den Figuren nicht dargestellte Baugruppen auf. So ist z. B. wenigstens ein Bildschirm zur Darstellung von Maschineninformationen vorgesehen, z. B. ein als Touchscreen ausgebildeter Bildschirm, wobei dieser mindestens eine Bildschirm z. B. als ein Großbildschirm, ein sogenannter wall screen ausgebildet und insbesondere längs zur hinteren Seite des Leitstandes 01 angeordnet ist. Des Weiteren weist der Leitstand 01 z. B. eine sich zumindest über die Auflage 04 erstreckende Überdachung auf, wobei in der Überdachung z. B. eine Beleuchtungseinrichtung angeordnet ist. Diese Beleuchtungseinrichtung weist z. B. auch mindestens eine Infrarotlichtquelle auf. Diese Beleuchtungseinrichtung ist z. B. derart angeordnet, dass mit ihr der zugehörige Erfassungsbereich 16 der betreffenden Kamera 08 ausgeleuchtet wird und dadurch eine von einer Person am Leitstand 01 ausgeübte Geste überhaupt erst oder zumindest qualitativ besser erfassbar wird.

### Bezugszeichenliste

- 01: Leitstand
- 02: Steuereinheit
- 03: Bedienelement
- 04: Auflage
- 05: -
- 06: Bedruckstoff
- 07: Messeinrichtung
- 08: Kamera
- 09: Bildverarbeitungseinrichtung
- 10: -
- 11: Datenleitung
- 12: Messbalken
- 13: Motor
- 14: Abstandssensor
- 15: -
- 16: Erfassungsbereich
- 17: Achse (16)
- 18: Begrenzungsfläche

- ϕ1: Öffnungswinkel
- ϕ2: Öffnungswinkel
- h1: Höhe
- h2: Höhe

## Patentansprüche

1. Leitstand einer Druckmaschine, aufweisend zumindest eine Auflage (04) zur Aufnahme eines bogenförmigen Bedruckstoffes (06), eine Messeinrichtung (07) zum Messen einer Messgröße des auf der Auflage aufgelegten bogenförmigen Bedruckstoffes (06), mindestens eine Kamera (08) zur Erfassung von mindestens einer von einer Person am Leitstand (01) ausgeübten Geste und eine Bildverarbeitungseinrichtung (09) zur Verarbeitung und Auswertung von der betreffenden Kamera (08) erfasster Bilder, wobei die Messeinrichtung (07) einen sich oberhalb des bogenförmigen Bedruckstoffes (06) erstreckenden Messbalken (12) aufweist, wobei der Messbalken (12) der Messeinrichtung (07) über dem auf der Auflage (04) aufgelegten bogenförmigen Bedruckstoff (06) verfahrbar ist, wobei die betreffende jeweils mindestens eine Geste erfassende Kamera (08) jeweils in oder an dem verfahrbaren Messbalken (12) angeordnet ist, wobei der Messbalken (12) zur Ausführung einer Bewegung von einem gesteuerten oder zumindest steuerbaren Motor (13) angetrieben ist, wobei zumindest die Steuerung des Motors (13) des Messbalkens (12) durch mindestens eine von der Person in einem Erfassungsbereich (16) der betreffenden Kamera (08) ausgeübte und von der betreffenden Kamera (08) erfasste Geste betätigt ist.

2. Leitstand nach Anspruch 1, **dadurch gekennzeichnet, dass** die betreffende Kamera (08) jeweils einen von der Auflage (04) abgewandten nach oben gerichteten Erfassungsbereich (16) aufweist, wobei die betreffende Kamera (08) die mindestens eine in ihrem Erfassungsbereich (16) von der Person ausgeübte Geste erfasst oder wobei mit der betreffenden Kamera (08) die mindestens eine in ihrem Erfassungsbereich (16) von der Person ausgeübte Geste zumindest erfassbar ist.

3. Leitstand nach Anspruch 1 oder 2, **dadurch gekennzeichnet, dass** ein mit dem Messbalken (12) der Messeinrichtung (07) auszuführender Messvorgang durch mindestens eine von der Person im Erfassungsbereich (16) der betreffenden Kamera (08) ausgeübte und von der betreffenden Kamera (08) erfasste Geste gesteuert ist.

4. Leitstand nach Anspruch 1 oder 2 oder 3, **dadurch gekennzeichnet, dass** in Verbindung mit der betreffenden Kamera (08) ein Abstandssensor (14) vorgesehen ist, wobei der Abstandssensor (14) einen Abstand zwischen der betreffenden Kamera (08) und der von der Person ausgeübten Geste misst.

5. Leitstand nach Anspruch 4, **dadurch gekennzeichnet, dass** der Abstandssensor (14) mindestens einen Laser oder einen Ultraschallsensor aufweist.

6. Leitstand nach Anspruch 1 oder 2 oder 3 oder 4 oder 5, **dadurch gekennzeichnet, dass** die betreffende Kamera (08) und/oder der Abstandssensor (14) dauerhaft aktiv ist bzw. sind.

7. Leitstand nach Anspruch 1 oder 2 oder 3 oder 4 oder 5 oder 6, **dadurch gekennzeichnet, dass** mittels der von der betreffenden Kamera (08) erfassten Geste eine Steuerfunktion ausgelöst ist, wobei die Steuerfunktion in Abhängigkeit vom gemessenen Abstand des Abstandssensors (14) ausgelöst oder zumindest auslösbar ist, wobei mit der Steuerfunktion ein Messvorgang der Messeinrichtung (07) oder ein Fixieren des Bedruckstoffes (06) auf der Auflage (04) ausgelöst ist.

8. Leitstand nach Anspruch 1 oder 2 oder 3 oder 4 oder 5 oder 6 oder 7, **dadurch gekennzeichnet, dass** die betreffende Kamera (08) und/oder der Abstandssensor (14) in oder an dem Messbalken (12) an seinem der die mindestens eine Geste ausübenden Person zugewandten Ende angeordnet ist bzw. sind.

9. Leitstand nach Anspruch 1 oder 2 oder 3 oder 4 oder 5 oder 6 oder 7 oder 8, **dadurch gekennzeichnet, dass** der Messbalken (12) oberhalb der Auflage (04) bidirektional linear verfahrbar ist.

10. Leitstand nach Anspruch 1 oder 2 oder 3 oder 4 oder 5 oder 6 oder 7 oder 8 oder 9, **dadurch gekennzeichnet, dass** der Erfassungsbereich (16) der betreffenden Kamera (08) längs zu einer Frontseite des Leitstandes (01) und/oder orthogonal dazu jeweils in einem stumpfen Öffnungswinkel (ϕ1; ϕ2) geöffnet ist.

11. Leitstand nach Anspruch 1 oder 2 oder 3 oder 4 oder 5 oder 6 oder 7 oder 8 oder 9 oder 10, **dadurch gekennzeichnet, dass** die Auflage (04) zur Frontseite des Leitstandes (01) fallend geneigt ausgebildet ist, wobei der die Geste erfassende Erfassungsbereich (16) der betreffenden Kamera (08) um denselben Neigungswinkel wie derjenige der Auflage (04) in Richtung zur Frontseite des Leitstandes (01) geneigt ist, so dass die zentrale Achse (17) des Erfassungsbereiches (16) der betreffenden Kamera (08) stets lotrecht zur Auflage (04) angeordnet ist.

12. Leitstand nach Anspruch 1 oder 2 oder 3 oder 4 oder 5 oder 6 oder 7 oder 8 oder 9 oder 10 oder 11, **dadurch gekennzeichnet, dass** der Erfassungsbereich (16) der betreffenden Kamera (08) in einer ersten Höhe (h1) über einer oberen Begrenzungsfläche (18) des Messbalkens (12) beginnend und bis in eine zweite von der ersten Höhe (h1) verschiedene Höhe (h2) über der oberen Begrenzungsfläche (18) des Messbalkens (12) reichend ausgebildet ist, wobei die Steuerfunktion in Abhängigkeit vom gemessenen Abstand des Abstandssensors (14) nur dann ausgelöst oder zumindest auslösbar ist, wenn die von der Person ausgeübte Geste in dem durch die erste und die zweite Höhe (h1; h2) definierten Erfassungsbereich (16) der betreffenden Kamera (08) erfasst worden ist.

13. Leitstand nach Anspruch 4 oder 5 oder 6 oder 7 oder 8 oder 9 oder 10 oder 11 oder 12, **dadurch gekennzeichnet, dass** der Abstandssensor (14) durch eine Kamera (08) mit zwei voneinander beabstandet angeordneten Bildsensoren ausgebildet ist, mit welchen der Abstand zwischen dieser Kamera (08) und der von der Person ausgeübten Geste durch Verwendung eines Triangulationsverfahrens ermittelt wird oder zumindest ermittelbar ist.

14. Leitstand nach Anspruch 1 oder 2 oder 3 oder 4 oder 5 oder 6 oder 7 oder 8 oder 9 oder 10 oder 11 oder 12 oder 13, **dadurch gekennzeichnet, dass** wenigstens ein Bildschirm zur Darstellung von Maschineninformationen vorgesehen ist.

15. Leitstand nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** eine sich zumindest über die Auflage (04) erstreckende Überdachung und/oder eine in der Überdachung angeordnete Beleuchtungseinrichtung vorgesehen ist bzw. sind.

## Claims

1. Control station of a printing machine, comprising at least one surface (04) for receiving a sheet-like printing substrate (06), a measuring device (07) for measuring a measurement variable of the sheet-like printing substrate (06) on the surface, at least one camera (08) for capturing at least one gesture performed by a person at the control station (01), and an image-processing device (09) for processing and evaluating images captured by said camera (08), wherein the measuring device (07) has a measuring beam (12) extending above the sheet-like printing substrate (06), wherein the measuring beam (12) of the measuring device (07) can be moved over the sheet-like printing substrate (06) on the surface (04), wherein said camera (08) capturing each at least one gesture is arranged in or on the moveable measuring beam (12), wherein the measuring beam (12) is driven by a controlled or at least controllable motor (13) in order to carry out the movement, wherein at least the controlling of the motor (13) of the measuring beam (12) is actuated by at least one gesture performed by the person in a capturing region (16) of said camera (08) and captured by said camera (08).

2. Control station according to claim 1, **characterised in that** each said camera (08) has a capturing region (16) facing away from the surface (04) and directed upward, wherein said camera (08) captures the at least one gesture performed by the person in its capturing region (16) or wherein the at least one gesture performed by the person in its capturing region (16) is capturable with said camera (08).

3. Control station according to claim 1 or 2, **characterised in that** a measuring operation to be carried out using the measuring beam (12) of the measuring device (07) is controlled by means of at least one gesture performed by the person in the capturing region (16) of said camera (08) and captured by said camera (08).

4. Control station according to claim 1 or 2 or 3, **characterised in that** in conjunction with said camera (08) a distance sensor (14) is provided, wherein the distance sensor (14) measures a distance between said camera (08) and the gesture performed by the person.

5. Control station according to claim 4, **characterised in that** the distance sensor (14) comprises at least one laser or one ultrasonic sensor.

6. Control station according to claim 1 or 2 or 3 or 4 or 5, **characterised in that** said camera (08) and/or the distance sensor (14) is or are perpetually active.

7. Control station according to claim 1 or 2 or 3 or 4 or 5 or 6, **characterised in that** a control function is triggered by means of the gesture captured by said camera (08), wherein the control function is triggered or at least can be triggered depending on the measured distance of the distance sensor (14), wherein a measuring operation of the measuring device (07) or an immobilisation of the printing substrate (06) on the surface (04) is triggered with the control function.

8. Control station according to claim 1 or 2 or 3 or 4 or 5 or 6 or 7, **characterised in that** said camera (08) and/or the distance sensor (14) is or are disposed in or on the measuring beam (12) at the end thereof facing the person performing the at least one gesture.

9. Control station according to claim 1 or 2 or 3 or 4 or 5 or 6 or 7 or 8, **characterised in that** the measuring beam (12) can be moved linearly and bidirectionally above the surface (04).

10. Control station according to claim 1 or 2 or 3 or 4 or 5 or 6 or 7 or 8 or 9, **characterised in that** the capturing region (16) of said camera (08) is open lengthwise along the front side of the control station (01) and/or orthogonally thereto, in each case at an obtuse opening angle (ϕ1; ϕ2).

11. Control station according to claim 1 or 2 or 3 or 4 or 5 or 6 or 7 or 8 or 9 or 10, **characterised in that** the surface (04)) is configured inclining down to the front side of the control station (01), wherein the capturing region (16) of said camera (08) capturing the gesture is inclined by the same angle of inclination as that of the surface (04) in the direction of the front side of the control station (01), such that the central axis (17) of the capturing region (16) of said camera (08) is always disposed plumb to the surface (04).

12. Control station according to claim 1 or 2 or 3 or 4 or 5 or 6 or 7 or 8 or 9 or 10 or 11, **characterised in that** the capturing region (16) of said camera (08) is configured beginning at a first height (h1) above an upper boundary surface (18) of the measuring beam (12) and extending into a second height (h2), different from the first height (h1), above the upper boundary surface (18) of the measuring beam (12), wherein the control function is triggered or at least can be triggered depending on the measured distance of the distance sensor (14), only if the gesture performed by the person has been captured in the capturing region (16) of said camera (08) defined by the first and the second height (h1; h2).

13. Control station according to claim 4 or 5 or 6 or 7 or 8 or 9 or 10 or 11 or 12, **characterised in that** the distance sensor (14) is formed by a camera (08) having two image sensors arranged spaced-apart from one another, with which the distance between this camera (08) and the gesture performed by the person is determined or is at least determinable through use of a triangulation method.

14. Control station according to claim 1 or 2 or 3 or 4 or 5 or 6 or 7 or 8 or 9 or 10 or 11 or 12 or 13, **characterised in that** at least one screen is provided for displaying machine information.

15. Control station according to claim 1 or 2 or 3 or 4 or 5 or 6 or 7 or 8 or 9 or 10 or 11 or 12 or 13 or 14, **characterised in that** a canopy extending at least over the surface (04) and/or a lighting device disposed within the canopy is or are provided.

## Revendications

1. Poste de commande d'une machine à imprimer, présentant au moins un appui (04) pour la réception d'un support d'impression en forme de feuille (06), un dispositif de mesure (07) pour la mesure d'une grandeur de mesure du support d'impression en forme de feuille (06) posé sur l'appui, au moins une caméra (08) pour la capture d'au moins un geste exercé par une personne au poste de commande (01) et un dispositif de traitement d'images (09) pour le traitement et l'évaluation d'images capturées par la caméra concernée (08), dans lequel le dispositif de mesure (07) présente une poutre de mesure (12) s'étendant au-dessus du support d'impression en forme de feuille (06), dans lequel la poutre de mesure (12) du dispositif de mesure (07) est déplaçable au-dessus du support d'impression en forme de feuille (06) posé sur l'appui (04), dans lequel la caméra concernée (08) capturant respectivement au moins un geste est agencée respectivement dans ou au niveau de la poutre de mesure déplaçable (12), dans lequel la poutre de mesure (12) est entraînée pour la réalisation d'un mouvement par un moteur (13) commandé ou au moins commandable, dans lequel au moins la commande du moteur (13) de la poutre de mesure (12) est actionnée par au moins un geste exercé par la personne dans une zone de capture (16) de la caméra concernée (08) et capturée par la caméra concernée (08).

2. Poste de commande selon la revendication 1, **caractérisé en ce que** la caméra concernée (08) présente respectivement une zone de détection (16) dirigée vers le haut opposée à l'appui (04), dans lequel la caméra concernée (08) capture l'au moins un geste exercé par la personne dans sa zone de capture (16) ou dans lequel l'au moins un geste exercé par la personne dans sa zone de capture (16) peut au moins être capturée avec la caméra concernée (08).

3. Poste de commande selon la revendication 1 ou 2, **caractérisé en ce qu'**une opération de mesure à effectuer avec la poutre de mesure (12) du dispositif de mesure (07) est commandée par au moins un geste exercé par la personne dans la zone de capture (16) de la caméra concernée (08) et capturé par la caméra concernée (08).

4. Poste de commande selon la revendication 1 ou 2 ou 3, **caractérisé en ce qu'**un capteur de distance (14) est prévu en relation avec la caméra concernée (08), dans lequel le capteur de distance (14) mesure une distance entre la caméra concernée (08) et le geste exercé par la personne.

5. Poste de commande selon la revendication 4 **caractérisé en ce que** le capteur de distance (14) présente au moins un laser ou un capteur à ultrasons.

6. Poste de commande selon la revendication 1 ou 2 ou 3 ou 4 ou 5, **caractérisé en ce que** la caméra concernée (08) et/ou le capteur de distance (14) est ou sont actif(s) en permanence.

7. Poste de commande selon la revendication 1 ou 2 ou 3 ou 4 ou 5 ou 6, **caractérisé en ce qu'**une fonction de commande est déclenchée au moyen du geste capturé par la caméra concernée (08), dans lequel la fonction de commande est déclenchée ou au moins déclenchable en fonction de la distance mesurée du capteur de distance (14), dans lequel une opération de mesure du dispositif de mesure (07) ou une fixation du support d'impression (06) sur l'appui (04) est déclenchée avec la fonction de commande.

8. Poste de commande selon la revendication 1 ou 2 ou 3 ou 4 ou 5 ou 6 ou 7, **caractérisé en ce que** la caméra concernée (08) et/ou le capteur de distance (14) est ou sont agencé(s) dans ou au niveau de la poutre de mesure (12) au niveau de son extrémité tournée vers la personne exerçant l'au moins un geste.

9. Poste de commande selon la revendication 1 ou 2 ou 3 ou 4 ou 5 ou 6 ou 7 ou 8, **caractérisé en ce que** la poutre de mesure (12) est déplaçable de manière bidirectionnelle linéaire au-dessus de l'appui (04).

10. Poste de commande selon la revendication 1 ou 2 ou 3 ou 4 ou 5 ou 6 ou 7 ou 8 ou 9, **caractérisé en ce que** la zone de détection (16) de la caméra concernée (08) est ouverte le long d'une face avant du poste de commande (01) et/ou orthogonalement à celle-ci respectivement selon un angle d'ouverture obtus (ϕ1 ; ϕ2).

11. Poste de commande selon la revendication 1 ou 2 ou 3 ou 4 ou 5 ou 6 ou 7 ou 8 ou 9 ou 10, **caractérisé en ce que** l'appui (04) est réalisé incliné descendant par rapport à la face avant du poste de commande (01), dans lequel la zone de détection (16) de la caméra concernée (08) capturant le geste est inclinée du même angle d'inclinaison que celle de l'appui (04) en direction de la face avant du poste de commande (01), de sorte que l'axe central (17) de la zone de détection (16) de la caméra concernée (08) est toujours agencé perpendiculairement à l'appui (04).

12. Poste de commande selon la revendication 1 ou 2 ou 3 ou 4 ou 5 ou 6 ou 7 ou 8 ou 9 ou 10 ou 11, **caractérisé en ce que** la zone de détection (16) de la caméra concernée (08) est réalisée commençant à une première hauteur (h1) au-dessus d'une surface de délimitation supérieure (18) de la poutre de mesure (12) et allant jusqu'à une deuxième hauteur (h2) différente de la première hauteur (h1) au-dessus de la surface de délimitation supérieure (18) de la poutre de mesure (12), dans lequel la fonction de commande est déclenchée ou au moins déclenchable en fonction de la distance mesurée du capteur de distance (14) seulement lorsque le geste exercé par la personne a été détecté dans la zone de détection (16) de la caméra concernée (08) définie par la première et la deuxième hauteur (h1 ; h2).

13. Poste de commande selon la revendication 4 ou 5 ou 6 ou 7 ou 8 ou 9 ou 10 ou 11 ou 12, **caractérisé en ce que** le capteur de distance (14) est réalisé par une caméra (08) avec deux capteurs d'image agencés à distance l'un de l'autre, avec lesquels la distance entre cette caméra (08) et le geste exercé par la personne est déterminée ou au moins déterminable en utilisant un procédé de triangulation.

14. Poste de commande selon la revendication 1 ou 2 ou 3 ou 4 ou 5 ou 6 ou 7 ou 8 ou 9 ou 10 ou 11 ou 12 ou 13, **caractérisé en ce qu'**au moins un écran est prévu pour la représentation d'informations de machine.

15. Poste de commande selon la revendication 1 ou 2 ou 3 ou 4 ou 5 ou 6 ou 7 ou 8 ou 9 ou 10 ou 11 ou 12 ou 13 ou 14, **caractérisé en ce qu'**un toit s'étendant au moins sur l'appui (04) et/ou un dispositif d'éclairage agencé dans le toit est ou sont prévu(s).
